# EUROPEAN PATENT APPLICATION

(11) **EP 3 243 727 A1**
(43) Date of publication of application: **15.11.2017**
(21) Application number: 16734902.6
(22) Date of filing: 05.01.2016
(51) Int. Cl.: B62B 3/14, B62B 3/04, B62B 3/00, B62B 5/00

(54) **TROLLEY HAVING SPACING STRUCTURE**

(30) Priority: 08.01.2015 CN 201520013253 U
(71) Applicant: Chigoo Interactive Technology Co., Ltd., Xinwu District Wuxi Jiangsu 214028 (CN)
(72) Inventor: CHEN, Tao, Wuxi, Jiangsu 214028 (CN); PAN, Chuanrong, Wuxi, Jiangsu 214028 (CN)
(74) Representative: Hautier IP
(86) International application number: PCT/CN2016/070126
(87) International publication number: WO 2016/110242

(57) **Abstract**

Disclosed is a trolley with a limit structure, including: a base destined to carry articles and equipped with wheels; a trolley frame fixedly connected to the base and having a handle for hand holding; a first limit plate provided at one side of the base near the trolley head and destined to limit the movement of an article being carried; and a second limit piece provided at one side of the base near the trolley tail and destined to limit the movement of the article being carried, the second limit piece appearing as a slope element having a substantially triangular end surface, and the slope element having a bevel facing the first limit plate. Even the length of goods exceeds the base, the goods can still be obliquely placed in the bearing space formed by the first limit plate, the second limit piece and the base.

## Description

### TECHNICAL FIELD

The present invention relates to vehicle devices, and in particular to a trolley having an anti-slide limit structure.

### BACKGROUND

With the development of commerce and public services, movable devices such as trolleys and luggage vans are widely used in public occasions such as shopping malls, supermarkets and airports to facilitate a user carrying luggage and articles. The existing trolleys and luggage vans are usually installed with electronic playing devices for the user to acquire information or for a merchant to play location information, navigation information, advertisement information or other relevant information. However, it is difficult for the current trolley to solve problems such as luggage sliding, the luggage holder accidentally touching the feet of the user when being pushed by a passenger. In addition, the luggage holder has such defects as insufficient strength, heavy weight and imperfect appearance and thus causing inconvenience in use.

### SUMMARY

In view of the problems in the prior art, the present invention provides a trolley with a limit structure, including: a base destined to carry articles and equipped with wheels; a trolley frame fixedly connected to the base and having a handle for hand holding; a first limit plate provided at one side of the base near the trolley head and destined to limit the movement of an article being carried; and a second limit piece provided at one side of the base near the trolley tail for limiting the movement of the article being carried, the second limit piece being formed as a slope element having a substantially triangular end surface, and the slope element having a bevel facing the first limit plate.

In some embodiments of the present invention, an inclination angle of the bevel with respect to the base is from 30° to 45°. Setting the included angle as 30-45 degrees can effectively increase the area of the trolley for carrying articles and can prevent the articles from sliding backwards during emergency braking.

In some embodiments of the present invention, the slope element includes a first support plate and a second support plate substantially vertically provided at two sides of the bevel, and the bevel, the first support plate and the second support plate form an accommodation space in an enclosed manner.

In some embodiments of the present invention, the trolley frame has two support beams extending upwards from the head end of the base, the first limit plate is provided between the two support beams, and the bevel has a notch with the location and shape thereof matching the two support beams so that when a plurality of trolleys are stacked together from front to back, the support beams of a rear trolley can be accommodated in the notch of a front trolley.

By providing an accommodation space at the tail portion of the trolley and opening a notch with a shape corresponding to the support beams on the first limit plate of the trolley, the support beams of the back trolley can come into the notch of the front trolley and a part of the trolley head of the back trolley can come into the accommodation space of the front trolley when two front and back trolleys are stacked and pushed. Two front and back trolleys provided in such a way can be combined more compactly and not easy to disengage from each other. Also, only trolleys of the same type can perform the above stacking, which facilitates placing by type.

In some embodiments of the present invention, a buffer piece (such as rubber) is provided at the edge of one side of the slope element near the leg of a user so as to avoid the leg or feet of the user touching the slope element to be damaged.

In some embodiments of the present invention, a plurality of anti-slide ribs is provided on the base and the bevel. The plurality of anti-slide ribs may be provided alternately.

In some embodiments of the present invention, the anti-slide ribs include a first rib and a second rib provided transversely at intervals in the width direction of the bevel and a third rib and a fourth rib formed by the longitudinal extension of the first rib and the second rib respectively in the length direction of the bevel, the third rib and the fourth rib are biased to each other. The length direction is a direction from the head end to the tail end of the trolley. By providing the alternate ribs horizontally and vertically, it is advantageous to increase the strength of the base and the bevel to achieve the purpose of bearing through a thin plate, that is, increasing strength while reducing weight. At the same time, the friction between the base and the bevel and the article being carried can be increased to prevent the article from sliding.

In some embodiments of the present invention, the plurality of anti-slide ribs may be further covered by anti-slide rubber.

The trolley provided in the present invention is provided with a first limit plate and a second limit piece with a slope shape for limiting the sliding of an article so that the article being carried can be placed on the base stably. Also, the bevel of the second limit piece is provided towards the direction of the first limit plate located at the trolley head and can ensure that the article being carried has a certain sliding space but will not slide from the base during emergency braking. At the same time, the second limit piece having a bevel can increase the bearing area. Even the length of the goods being carried exceeds out of the base, the goods can still be obliquely placed within the bearing space formed by the first limit plate, the second limit piece and the base without sliding.

### BRIEF DESCRIPTION OF THE DRAWINGS

Fig. 1 is a side view of a trolley according to an embodiment of the present invention;
Fig. 2 is a perspective view of a trolley according to an embodiment of the present invention;
Fig. 3 is a structure view of a limit plate according to an embodiment of the present invention; and

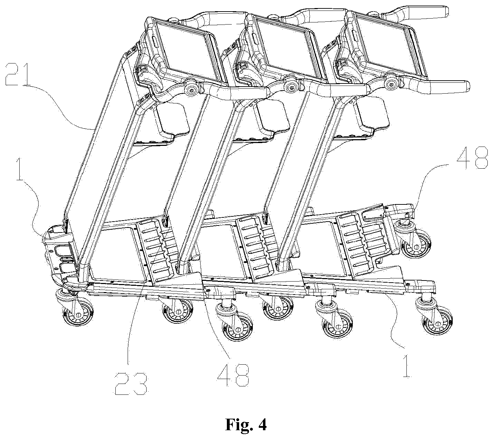

Fig. 4 is a view of a plurality of trolleys stacked together according to an embodiment of the present invention.

### DETAILED DESCRIPTION

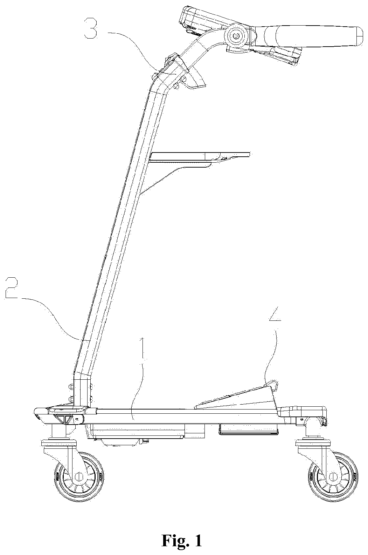

As shown in Fig. 1, a trolley is provided according to an embodiment of the present invention, including a base 1, a first limit plate 2 (trolley frame) provided at the head end of the base 1, a handle 3 provided at an end of the first limit plate 2 and a second limit piece 4 provided at the tail end of the base 1. The second limit piece 4 is of a slope shape. A bearing space for bearing articles is formed by the base 1, the trolley frame 2, the handle 3 and the second limit piece 4.

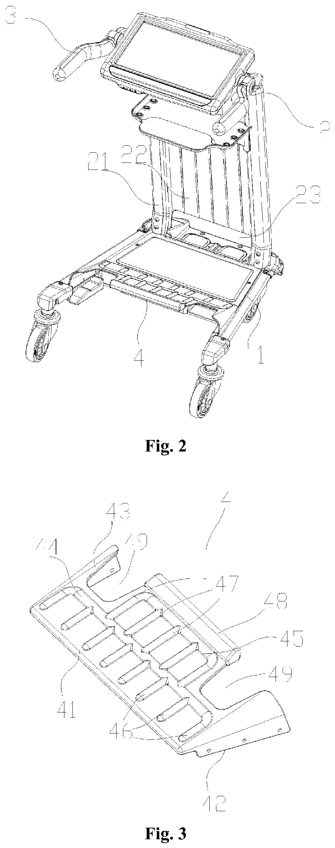

Referring to Figs. 2 and 3, the second limit piece 4 includes a main body 41 placed obliquely. One side of the main body 41 near the head end of the base 1 is fixedly connected to the base 1 and one side near the tail end of the base 1 is inclined upwards. The included angle of the main body 41 is from 30° to 45°. The second limit piece further includes a first support plate 42 and a second support plate 43 provided vertically. The first support plate 42 and the second support plate 43 are provided oppositely at two sides of the main body 41. The first support plate 42 and the second support plate 43 are substantially triangular. The upper surfaces of the first support plate 42 and the second support plate 43 are both fixedly connected to the lower surface of the main boy 41. The lower surfaces of the first support plate 42 and the second support plate 43 are both fixedly connected to the base 1. As such, the front end of the main body 41 is fixedly connected to the base 1, and the rear end of the main body 41 extends obliquely upwards out of the edge of the base 1 from the tail end of the base 1. That is, an incompletely enclosed accommodation space is formed by the main body 41, the first support plate 42 and the second support plate 43. In other embodiments, the main body 41 may not extend beyond the base 1, but sits as a whole on the base 1. As such, an accommodation space is formed by the main body 41, the first support plate 42, the second support plate 43 and the base 1. It can be understood that the accommodation space formed in such a way is smaller than the accommodation space formed in the previous embodiment.

Still referring to Fig. 3, the upper surface of the main body 41 of the second limit piece is provided with a plurality of ribs. In particular, the plurality of ribs include a first horizontal rib 44 and a second horizontal rib 45 provided at intervals, and a plurality of third vertical ribs 46 formed by the extension of the first horizontal rib 44 toward the head end direction of the base 1 and a plurality of fourth ribs 47 formed by the second horizontal rib 45 toward the direction of the first horizontal rib 44. The first horizontal rib 44 is parallel to the second horizontal rib 45. The plurality of third vertical ribs 46 is perpendicular to the first horizontal rib 44. The plurality of fourth vertical ribs 47 is perpendicular to the second horizontal rib 45. The fourth vertical rib 47 has a connection point to the first horizontal rib 44. Thus, the first horizontal rib 44 and the third vertical ribs 46 as well as the second horizontal rib 45 and the fourth vertical ribs 47 form a substantial "EE" pattern. The length of the first horizontal rib 44 is greater than that of the second horizontal rib 45. The connection point of the fourth vertical rib 47 and the first horizontal rib 44 is substantially positioned at the middle point of the first horizontal rib 44 intercepted by two adjacent third vertical ribs 46. The first horizontal rib 44, the second horizontal rib 45, the third vertical rib 46 and the fourth vertical rib 47 are adhered to soft rubber or covered with soft rubber from the peripheral.

In this embodiment, the second limit piece also includes a limit block 48 provided at an end of the main boy 41 inclining upwards and covered with soft rubber. The limit block 48 is a buffer piece. The main body 41 is provided with two notches 49 symmetrically provided at two sides of the limit block 48. After the provision of a plurality of horizontally and vertically alternate ribs, the strength of the second limit piece in the present invention is enhanced. When an article is carried in the bearing space formed by the base 1, the first limit plate 2, the handle 3 and the second limit piece, the second limit piece can provide a relatively large friction force to prevent the article from sliding.

As shown in Fig. 2, the first limit plate 2 according to the present invention includes two support beams 21 provided at the head end of the base 1 and a baffle 22 provided between the two support beams 21 and fixedly connected to the support beam 21. One end of the support beam 21 is fixedly connected to the base 1 and the other end is fixedly connected to the handle 3. The baffle 22 is merely fixed to the two support beams 22 but is not connected to the base 1. Thus, a gap 23 is formed between the baffle 22 and the base 1.

The head end of the base 1 is designed of the same shape as the accommodation space formed by the first support plate 42, the second support plate 43 and the main body 41 so that when such a trolley needs to be pushed or placed in a stacked manner, the head end of the base 1 of a back trolley can come into the accommodation space of a front trolley. Meanwhile, the limit block 48 of the second limit piece 4 and a part of the main body 41 pass through the gap 23 formed between the baffle 22 and the base 1, and the limit block 48 is snap-fitted on the baffle 22 reversely. The two support beams 21 of the back trolley can come into the notch 49 of the second limit piece 4 of the front trolley properly. When two front and back trolleys need to be disengaged, the back trolley needs to be lifted slightly so that the limit block 48 disengages from the baffle 22.

According to the above description, the second limit piece 4 can not only provide a friction force for the article carried on the trolley but also plays a positioning function when two trolleys are stacked. The second limit piece 4 is provided with ribs to enhance the strength thereof. In addition, the limit plate 4 is also covered with soft rubber so as to avoid collision and friction between the limit plate and the article being carried resulting in damage to the article being carried. When a user pushes such a trolley, if the feet of the user touch the limit block 48 at the tail portion of the second limit piece 4 or the main body 41 accidentally, no fierce vibration will be generated to hurt the user. Furthermore, the base 1 may also be provided with some anti-slide ribs (not shown).

Various embodiments of the present invention have been described in detail above. Those skilled in the art will understand that various modifications, changes and variations can be made to the embodiments without departing from the scope of the present invention (which is limited by the appended claims). The scope of the claims should be explained as a whole and conforms to the broadest scope consistent with the description, which is not limited to implementation models in the examples or detailed description.

## Claims

1. A trolley with a limit structure, comprising:
a base destined to carry articles and equipped with wheels;
a trolley frame fixedly connected to the base and having a handle for hand holding;
a first limit plate provided at one side of the base near the trolley head and destined to limit the movement of an article being carried; and
a second limit piece provided at one side of the base near the trolley tail and destined to limit the movement of the article being carried, the second limit piece being a slope element having a bevel facing the first limit plate.

2. The trolley according to claim 1, wherein the inclination included angle of the bevel relative to the base is from 30° to 45°.

3. The trolley according to claim 1, wherein the slope element includes a first support plate and a second support plate substantially vertically provided at two sides of the bevel, and the bevel, the first support plate and the second support plate form an accommodation space in an enclosed manner.

4. The trolley according to claim 3, wherein the trolley frame has two support beams extending upwards from the head end of the base, the first limit plate is provided between the two support beams, and the bevel has a notch with the location and shape thereof matching the two support beams so that when a plurality of trolleys are stacked together from front to back, the support beams of a rear trolley can be accommodated in the notch of a trolley preceding it.

5. The trolley according to claim 4, wherein a buffer piece is provided at the edge of the slope element near the leg of a user.

6. The trolley according to claim 5, wherein the buffer piece is rubber.

7. The trolley according to claim 1, wherein a plurality of anti-slide ribs is provided on the base and the bevel.

8. The trolley according to claim 7, wherein the plurality of anti-slide ribs is provided alternately.

9. The trolley according to claim 8, wherein the anti-slide ribs include a first rib and a second rib provided transversely at intervals in the width direction of the bevel and a third rib and a fourth rib formed by the longitudinal extension of the first rib and the second rib respectively in the length direction of the bevel, the third rib and the fourth rib are biased to each other.

10. The trolley according to claim 7, wherein the plurality of anti-slide ribs is covered by anti-slide rubber.

11. The trolley according to claim 1, wherein the end surface of the slope element is triangle.
